# EUROPEAN PATENT APPLICATION

(11) **EP 4 800 759 A1**
(43) Date of publication of application: **02.09.2026**
(21) Application number: 24887327.5
(22) Date of filing: 16.05.2024
(51) Int. Cl.: H01M 4/36, H01M 10/054, B65D 88/74

(54) **NEGATIVE ELECTRODE SLURRY PROCESSING METHOD AND NEGATIVE ELECTRODE SLURRY PROCESSING APPARATUS**

(30) Priority: 07.11.2023 CN 202311470246
(71) Applicant: Contemporary Amperex Technology Co., Limited, Ningde, Fujian 352100 (CN)
(72) Inventor: WU, Kai, Ningde, Fujian 352100 (CN); ZHOU, Yi, Ningde, Fujian 352100 (CN); ZHANG, Ming, Ningde, Fujian 352100 (CN)
(74) Representative: Ziebig Hengelhaupt Intellectual Property Attorneys Patentanwaltskanzlei PartGmbB
(86) International application number: PCT/CN2024/093659
(87) International publication number: WO 2025/097703

(57) **Abstract**

Provided in the present application are a negative electrode slurry processing method and apparatus. The processing method comprises: storing and/or transporting negative electrode slurry at a temperature of 0°C-18°C, the negative electrode slurry comprising porous carbon. The processing method effectively ameliorates bubbling and gelation in the negative electrode slurry, improving the cycling stability and the storage performance of sodium secondary batteries.

## Description

### CROSS-REFERENCE TO RELATED APPLICATIONS

The present application claims priority to Chinese Patent Application No. 202311470246.0, filed on November 07, 2023 and entitled "PROCESSING METHOD FOR NEGATIVE ELECTRODE SLURRY AND PROCESSING APPARATUS FOR NEGATIVE ELECTRODE SLURRY", which is incorporated herein by reference in its entirety.

### TECHNICAL FIELD

The present application relates to the technical field of sodium-ion batteries, and in particular, to a processing method and apparatus for a negative electrode slurry.

### BACKGROUND

In recent years, secondary batteries have been widely used in energy storage power systems such as hydropower, thermal power, wind power and solar power stations, as well as the fields of power tools, electric bicycles, electric motorcycles, electric vehicles, military equipment, aerospace and other fields.

Compared with lithium secondary batteries, sodium secondary batteries have a greater competitive advantage due to abundant and widely distributed sodium resources. However, sodium secondary batteries have certain defects in manufacturing, storage, and transportation processes thereof. For example, foaming exists in negative electrode slurry, which prevents sodium secondary batteries from being mass-produced to meet market demand.

### SUMMARY OF THE INVENTION

The present application is made in view of the above-mentioned problems, and its purpose is to provide a processing method for a negative electrode slurry, which aims to alleviate foaming and gelation phenomena of negative electrode slurry, so as to improve cycle stability and storage performance of sodium secondary batteries.

A first aspect of the present application provides a processing method for a negative electrode slurry, including: storing and/or transporting the negative electrode slurry at a temperature of 0°C to 18°C, the negative electrode slurry including porous carbon.

Controlling the temperature of storing and/or transporting the negative electrode slurry to 0°C to 18°C increases hydrogen bonding between solvent water molecules, which is conducive to increasing surface tension of the negative electrode slurry and adsorption capacity of surfaces of negative electrode active material particles in the negative electrode slurry for water molecules. That is, interaction forces between water molecules in the negative electrode slurry and adsorption forces of the surfaces of the negative electrode active material particles for water molecules are both greater than adsorption forces of pores of the porous carbon for water molecules. This reduces the probability of water molecules entering the pores of the negative electrode active material, reduces generation of bubbles in the negative electrode slurry, alleviates gelation and foaming phenomena of the negative electrode slurry, enhances the stability of the negative electrode slurry, reduces the degree of missed coating during the coating of the negative electrode slurry, and improves cycle stability and storage performance of sodium secondary batteries.

In any embodiment, the negative electrode slurry is stored and/or transported at a temperature of 3°C to 10°C, and optionally, the negative electrode slurry is stored and/or transported at a temperature of 3°C to 6°C.

Further controlling the temperature of storing and/or transporting the negative electrode slurry to 3°C to 10°C or 3°C to 6°C is conducive to further increasing the surface tension of the negative electrode slurry and the adsorption capacity of the surfaces of the negative electrode active material particles in the negative electrode slurry for the water molecules, alleviating the foaming phenomenon of the negative electrode slurry, enhancing the stability of the negative electrode slurry, and improving its cycle performance and storage performance of sodium secondary batteries. Furthermore, it can further reduce the increase in costs caused by an excessively low temperatures.

In any embodiment, the negative electrode slurry is stored or transported at a stirring speed not exceeding 25 rpm.

The stirring speed during storage and/or transportation of the negative electrode slurry is controlled not to exceed 25 rpm. That is, the negative electrode slurry may be in a static state or in a low-speed, slow-stirring state, both of which can achieve the effect of alleviating the gelation and foaming phenomena of the negative electrode slurry. Compared with the low-speed, slow-stirring state of the negative electrode slurry, the stirring speed in a container being 0 rpm can significantly reduce production costs. Compared with the negative electrode slurry being in a static state, low-speed slow stirring can hinder sedimentation of the negative electrode slurry, thereby further improving the storage or transportation quality of the negative electrode slurry and enhancing its cycle performance and storage performance in sodium secondary batteries.

In any embodiment, the porous carbon includes hard carbon.

In any embodiment, a solid content of the negative electrode slurry is 45% to 55%, and optionally 48% to 53%.

Controlling the solid content of the negative electrode slurry within a suitable range is conducive to subsequent coating of the negative electrode slurry. Further controlling of the solid content of the negative electrode slurry to 48% to 53% can take into account the storage, transportation, and coating of the negative electrode slurry.

In any embodiment, after the negative electrode slurry is processed by a processing method for 48 hours, the volume of bubbles per unit mass of porous carbon does not exceed 4 mL.

After the negative electrode slurry is processed by the processing method for 48 hours, the volume of bubbles per unit mass of porous carbon does not exceed 4 mL, which can effectively alleviate the foaming phenomenon of the negative electrode slurry and enhance its cycle stability and storage performance in sodium secondary batteries.

In any embodiment, a viscosity change of the negative electrode slurry after being processed by the processing method for 48 hours ranges from 10000 mPa·s to 30000 mPa·s.

The viscosity change of the negative electrode slurry after being processed by the processing method for 48 hours ranges from 10000 mPa·s to 30000 mPa·s. This allows the negative electrode slurry to remain fluid after long-term storage or transportation, thereby alleviating the gelation phenomenon of the negative electrode slurry and facilitating subsequent coating.

In any embodiment, the processing method specifically includes: preparing negative electrode slurry, and storing the negative electrode slurry in a slurry storage tank and/or transporting the negative electrode slurry in a pipeline.

In any embodiment, a maximum stirring speed for preparing the negative electrode slurry is 800 rpm to 1800 rpm, and optionally, 1000 rpm to 1500 rpm.

In any embodiment, the temperature for preparing the negative electrode slurry is 5°C to 35°C, and optionally 5°C to 15°C.

Controlling the stirring speed and temperature within suitable ranges during the preparation of the negative electrode slurry is conducive to reducing gelation and foaming phenomena after the negative electrode slurry is processed, thereby improving the cycle stability and storage performance of the battery.

A second aspect of the present application provides an processing apparatus for a negative electrode slurry, the apparatus including:
a cavity configured to accommodate negative electrode slurry, the negative electrode slurry including porous carbon; and
a cooling apparatus configured to cool the cavity so that a temperature of the cavity ranges from 0°C to 18°C.

The apparatus equipped with the cooling apparatus can control the temperature of the cavity, thereby alleviating gelation and foaming phenomena of the negative electrode slurry and enhancing cycle stability and storage performance of sodium secondary batteries.

In any embodiment, the apparatus includes at least one of a slurry storage tank and a transport pipeline.

The negative electrode slurry can be stored in the slurry storage tank, and the negative electrode slurry can also be transported in the transport pipeline.

### BRIEF DESCRIPTION OF THE DRAWINGS

FIG. 1a) is a schematic structural diagram of a slurry storage tank according to an embodiment of the present application;
FIG. 1b) is a schematic structural diagram of a transport pipeline according to an embodiment of the present application;
FIG. 2 is a schematic diagram showing division of gelation state test results of negative electrode slurry after storage and/or transportation at 25°C for 48 hours according to an embodiment of the present application;
FIG. 3 is a schematic diagram of a sodium secondary battery according to an embodiment of the present application;
FIG. 4 is an exploded diagram of the sodium secondary battery according to an embodiment of the present application as shown in FIG. 3;
FIG. 5 is a schematic diagram of a battery module according to an embodiment of the present application;
FIG. 6 is a schematic diagram of a battery pack according to an embodiment of the present application;
FIG. 7 is an exploded diagram of the battery pack according to an embodiment of the present application as shown in FIG. 6; and
FIG. 8 is a schematic diagram of an electrical apparatus using a sodium secondary battery as a power supply according to an embodiment of the present application.

List of reference numerals:
61 Slurry storage tank; 601 Condensate inlet of slurry storage tank; 602 Condensate outlet of slurry storage tank; 71 Transport pipeline; 701 Condensate inlet of transport pipeline; 702 Condensate outlet of transport pipeline; 1 Battery pack; 2 Upper box body; 3 Lower box body; 4 Battery module; 5 Sodium secondary battery; 51 Case; 52 Electrode assembly; 53 Top cover assembly.

### DETAILED DESCRIPTION

Hereinafter, embodiments of a method and apparatus for processing negative electrode slurry of the present application will be described in detail with appropriate reference to the accompanying drawings. However, unnecessary detailed explanations may be omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit may be combined with any upper limit to form a range. For example, if the ranges 60 to 120 and 80 to 110 are listed for specific parameters, it is understood that the ranges 60 to 110 and 80 to 120 are also expected. In addition, if the listed minimum range values are 1 and 2 and if the listed maximum range values are 3, 4, and 5, the following ranges can all be expected: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where a and b are both real numbers. For example, the numerical range "0 to 5" indicates that all real numbers between "0 to 5" have been listed herein, and "0 to 5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, the condition "A or B" is met by either of the following: A is true (or exists) and B is false (or does not exist); A is false (or does not exist) and B is true (or exists); or both A and B are true (or exist).

Compared with traditional graphite, porous carbon, especially graphite, is often chosen as one of commonly used negative electrode active materials in sodium secondary batteries because it has higher capacity and rate performance. A traditional graphite system exhibits a solid-gas-liquid interface on a solid-liquid surface due to wetting, leading to residual gas causing foaming in negative electrode slurry. Furthermore, the presence of a surfactant in the negative electrode slurry allows air to enter the negative electrode slurry during stirring, further exacerbating foaming. Foaming is typically alleviated by adding a low-surface-tension surfactant such as a wetting agent or a defoamer. However, porous carbon, with its pores, allows water molecules in a solvent of the negative electrode slurry to slowly enter the pores of the porous carbon during preparation, storage, and transportation of the negative electrode slurry, expelling gases adsorbed in the pores of the porous carbon and causing foaming in the negative electrode slurry, particularly severe foaming during storage and transportation of the negative electrode slurry. Introducing the low-surface-tension surfactant into the negative electrode slurry further promotes the entry of the water molecules in the solvent into the pores of the porous carbon, thereby worsening the foaming. Foaming of the negative electrode slurry is detrimental to subsequent coating of the negative electrode slurry. The foaming phenomenon of the negative electrode slurry may also cause gelation problems, increasing the difficulty of coating. It also has a significant impact on mass production and performance of sodium secondary batteries. Therefore, it is necessary to design a processing method for a negative electrode slurry to alleviate the foaming and gelation phenomena of the negative electrode slurry, so that products thereof can meet market demands.

### [Processing method for negative electrode slurry]

Based on this, the present application proposes a processing method for a negative electrode slurry, including storing and/or transporting negative electrode slurry at a temperature of 0°C to 18°C, the negative electrode slurry including porous carbon.

A porous carbon material refers to a carbon material with pore structures of different sizes, and has a highly developed specific surface area and pore structures, with pore sizes ranging from ultrafine nanoscale micropores of molecular size to micron-sized pores suitable for microbial activity. According to the specification of the International Union of Pure and Applied Chemistry (IUPAC), pores may be classified into three types according to their sizes: micropores (<2 nm), mesopores (2 nm to 50 nm), and macropores (>50 nm). In some embodiments, the porous carbon includes hard carbon.

In some embodiments, the temperature of storing and/or transporting the negative electrode slurry may optionally be 0°C, 1°C, 2°C, 3°C, 4°C, 5°C, 6°C, 7°C, 8°C, 9°C, 10°C, 12°C, 14°C, 15°C, 16°C, 18°C, or a value in a range consisting of any two of the above.

Studies have found that a sodium storage mechanism of porous carbon, especially hard carbon, may be simply summarized as: 1) adsorption on the surface, defect sites, and functional groups; 2) micropore filling; and 3) intercalation of graphitized carbon layers. Based on the above sodium storage mechanism, the specific capacity may be increased by improving porosity and optimizing pore structures. However, as the porosity increases, during the preparation, storage, and transportation of negative electrode slurry using porous carbon as the negative electrode active material, solvent water molecules gradually enter the porous carbon pores, expelling the gas adsorbed in the porous carbon pores, resulting in a large number of bubbles in the negative electrode slurry and deteriorating the stability of the negative electrode slurry . The foaming phenomenon of the negative electrode slurry may lead to missed coating in the coating process of the negative electrode slurry, which will affect the distribution of active material in the electrode plate, causing fluctuations in a CB value and posing a serious risk of sodium precipitation.

It is understandable that, controlling the temperature of storing and/or transporting the negative electrode slurry to 0°C to 18°C increases hydrogen bonding between solvent water molecules, which is conducive to increasing surface tension of the negative electrode slurry and adsorption capacity of surfaces of negative electrode active material particles in the negative electrode slurry for water molecules. That is, interaction forces between water molecules in the negative electrode slurry and adsorption forces of the surfaces of the negative electrode active material particles for water molecules are both greater than adsorption forces of pores of the porous carbon for water molecules. This reduces the probability of water molecules entering the pores of the negative electrode active material, reduces generation of bubbles in the negative electrode slurry, alleviates gelation and foaming phenomena of the negative electrode slurry, enhances the stability of the negative electrode slurry, reduces the degree of missed coating during the coating of the negative electrode slurry, and improves cycle stability and storage performance of sodium secondary batteries.

Herein, "the temperature of storing and/or transporting the negative electrode slurry being 0°C to 18°C" may be detected by any temperature detection apparatus, such as a temperature sensor.

In some embodiments, the negative electrode slurry is stored and/or transported at a temperature of 3°C to 10°C. In some embodiments, the negative electrode slurry is stored and/or transported at a temperature of 3°C to 6°C. In some embodiments, the temperature of storing and/or transporting the negative electrode slurry may optionally be 3°C, 4°C, 5°C, 6°C, 7°C, 8°C, 9°C, 10°C, or a value in a range consisting of any two of the above.

Further controlling the temperature of storing and/or transporting the negative electrode slurry to 3°C to 10°C or 3°C to 6°C is conducive to further increasing the surface tension of the negative electrode slurry and the adsorption capacity of the surfaces of the negative electrode active material particles in the negative electrode slurry for the water molecules, alleviating the gelation and foaming phenomena of the negative electrode slurry, enhancing the stability of the negative electrode slurry, and improving its cycle stability and storage performance of sodium secondary batteries. Furthermore, it can further reduce the increase in costs caused by excessively low temperatures.

In some embodiments, the negative electrode slurry is stored and/or transported at a stirring speed not exceeding 25 rpm.

In some embodiments, the stirring speed for storing and/or transporting the negative electrode slurry is 0 rpm, 0.1 rpm, 0.5 rpm, 1 rpm, 3 rpm, 5 rpm, 7 rpm, 9 rpm, 10 rpm, 13 rpm, 15 rpm, 20 rpm, 25 rpm, or a value in a range consisting of any two of the above.

The stirring speed for storing and/or transporting the negative electrode slurry is controlled to not exceed 25 rpm, that is, the negative electrode slurry in a container may be in a static state or in a low-speed, slow-stirring state, both of which can achieve the effect of alleviating the gelation and foaming phenomena of the negative electrode slurry.

In some embodiments, the stirring speed for storing and/or transporting the negative electrode slurry is 0 rpm to 15 rpm.

The stirring speed being 0 rpm can significantly reduce production costs. Compared with the negative electrode slurry being in a static state, slow stirring at a low speed can hinder sedimentation of the slurry while avoiding slow viscosity of the slurry and excessive amount of water from entering pores of the porous carbon, thereby being capable of further improving the storage or transportation quality of the negative electrode slurry and enhancing its cycle performance and storage performance in sodium secondary batteries.

In some embodiments, the porous carbon includes hard carbon.

In some embodiments, a solid content of the negative electrode slurry is 45% to 55%. In some embodiments, the solid content of the negative electrode slurry is 48% to 53%.

In some embodiments, the solid content of the negative electrode slurry is optionally 45%, 46%, 47%, 48%, 49%, 50%, 51%, 52%, 53%, 54%, 55%, or a value in a range consisting of any two of the above.

Controlling the solid content of the negative electrode slurry within a suitable range is conducive to subsequent coating of the negative electrode slurry. Further controlling of the solid content of the negative electrode slurry to 48% to 53% can take into account the storage, transportation, and coating of the negative electrode slurry.

In some embodiments, after the negative electrode slurry is processed by a processing method for 48 hours, the volume of bubbles per unit mass of porous carbon does not exceed 4 mL/g.

In the present application, the volume of bubbles per unit mass of porous carbon in the negative electrode slurry may be tested using methods known in the art, such as sealing the negative electrode slurry (the mass of the porous carbon in the negative electrode slurry is m, in g) in a sealed bag and testing a gas change using a water displacement method. An initial volume is V0, in mL, and a test volume after 48 hours is V1, in mL. Then, the volume of bubbles per unit mass of porous carbon = (V1-V0)/m, in mL/g.

In some embodiments, after the negative electrode slurry is processed by the processing method for 48 hours, the volume of bubbles per unit mass of porous carbon is 0 mL/g, 1 mL/g, 2 mL/g, 3 mL/g, 4 mL/g, or a value in a range consisting of any two of the above.

The volume of bubbles per unit mass of porous carbon in the negative electrode slurry does not exceed 4 mL/g, which can effectively alleviate the foaming phenomenon of the negative electrode slurry and enhance its cycle stability and storage performance in sodium secondary batteries.

In some embodiments, a viscosity change of the negative electrode slurry after being processed by the processing method for 48 hours ranges from 10000 mPa·s to 30000 mPa·s.

In the present application, the viscosity change in the negative electrode slurry after being processed by the processing method for 48 hours may be tested using methods known in the art, for example, the initial viscosity of the negative electrode slurry before being processed is measured using a rotational viscometer. A suitable rotor is selected, the rotor of the viscometer is fixed, and the negative electrode slurry is placed under the rotor of the viscometer so that the negative electrode slurry just submerges the scale line of the rotor, with an instrument model: Shanghai Fangrui NDJ-5S, rotor: 63# (2000-10000 mPa.s ), 64# (10000-50000 mPa.s), rotational speed: 12 rpm, test temperature: 25°C, test time 5 min. The data is read when the display is stable.

The viscosity of the negative electrode slurry is re-tested after storing and/or transporting for 48 hours, and the viscosity of the negative electrode slurry is measured using a rotational viscometer. A suitable rotor is selected, the rotor of the viscometer is fixed, and the negative electrode slurry is placed under the rotor of the viscometer so that the negative electrode slurry just submerges the scale line of the rotor, with an instrument model: Shanghai Fangrui NDJ-5S, rotor: 63# (2000-10000 mPa.s ), 64# (10000-50000 mPa.s), rotational speed: 12 rpm, test temperature: 25°C, test time 5 min. The data is read when the display is stable. The viscosity change of the negative electrode slurry after 48 hours of storage and/or transportation is a difference between the viscosity of the negative electrode slurry after 48 hours of storage and/or transportation and the initial viscosity of the negative electrode slurry.

In some embodiments, the viscosity change of the negative electrode slurry after being placed at 25°C for 48 hours is 10000 mPa·s, 15000 mPa·s, 20000 mPa·s, 25000 mPa·s, 30000 mPa·s, or a value in a range consisting of any two of the above.

The viscosity change of the negative electrode slurry after being processed by the processing method for 48 hours ranges from 10000 mPa·s to 30000 mPa·s. This allows the negative electrode slurry to remain fluid after long-term storage or transportation, thereby alleviating the gelation phenomenon of the negative electrode slurry and facilitating subsequent coating.

In some embodiments, the processing method specifically includes: preparing negative electrode slurry, and storing the negative electrode slurry in a slurry storage tank and/or transporting the negative electrode slurry in a pipeline.

In some embodiments, a maximum stirring speed for preparing the negative electrode slurry is 800 rpm to 1800 rpm. In some embodiments, the maximum stirring speed for preparing the negative electrode slurry is 1000 rpm to 1500 rpm.

In some embodiments, the stirring speed for preparing the negative electrode slurry is 800 rmp, 900 rmp, 1000 rmp, 1100 rmp, 1200 rmp, 1300 rmp, 1400 rmp, 1500 rmp, 1600 rmp, 1700 rmp, 1800 rmp, or a value in a range consisting of any two of the above.

By controlling the stirring speed of the negative electrode slurry within a suitable range, the negative electrode slurry with uniform solid particle distribution can be prepared, thereby improving the stability of the negative electrode slurry, reducing gelation and foaming phenomena of the negative electrode slurry after being processed, and improving the cycle stability and storage performance of the battery.

In some embodiments, the temperature for preparing the negative electrode slurry is 5°C to 35°C. In some embodiments, the temperature for preparing the negative electrode slurry is 5°C to 15°C. In some embodiments, the temperature for preparing the negative electrode slurry is optionally 5°C, 10°C, 15°C, 20°C, 25°C, 30°C, 35°C, or a value in a range consisting of any two of the above.

Controlling the temperature of the negative electrode slurry within a suitable range during the preparation reduces the gelation and foaming phenomena after the negative electrode slurry is processed, thereby improving the cycle stability and storage performance of the battery.

In some embodiments, preparing the negative electrode slurry further includes:
at a temperature of 5°C to 35°C, mixing and stirring raw materials including a negative electrode active material, a conductive agent, a binder, and a dispersant to prepare negative electrode slurry. In some embodiments, the raw materials further include a plasticizer.

In some embodiments, the negative electrode active material includes hard carbon.

In some embodiments, the conductive agent includes one or more of SuperP, Ketjen black, acetylene black, carbon nanotubes, and graphene. In some embodiments, the conductive agent includes SuperP.

In some embodiments, the binder includes one or more of styrene-butadiene rubber, polyacrylic acid, polyacrylate, polyamide, poly(acrylonitrile-acrylate), and poly(styrene-acrylate). In some embodiments, the binder includes styrene-butadiene rubber.

In some embodiments, the dispersant includes sodium carboxymethyl cellulose.

In some embodiments, the plasticizer includes 1,3-butanediol.

The above dispersant is conducive to improving the dispersion uniformity of the negative electrode slurry and the processability of the negative electrode slurry. The above conductive agent and binder may give the negative electrode plate prepared from the negative electrode slurry excellent conductivity and adhesion. The above plasticizer may give the negative electrode plate prepared from the negative electrode slurry excellent toughness and reduce the cracking of the negative electrode plate.

### [Processing apparatus for negative electrode slurry]

In some embodiments, the present application further provides an processing apparatus for a negative electrode slurry, the apparatus including:
a cavity configured to accommodate negative electrode slurry, the negative electrode slurry including porous carbon; and
a cooling apparatus configured to cool the cavity so that a temperature of a container ranges from 0°C to 18°C.

The apparatus equipped with the cooling apparatus can control the temperature of the cavity, thereby alleviating gelation and foaming phenomena of the negative electrode slurry and enhancing cycle stability and storage performance of sodium secondary batteries.

In some embodiments, the apparatus further includes a temperature detection apparatus, and the temperature detection apparatus is configured to monitor the temperature of the cooling apparatus and/or the apparatus.

In some implementations, the temperature detection apparatus is a temperature sensor.

The temperature detection apparatus can control the temperature of the cavity to 0°C to 18°C, thereby alleviating gelation and foaming phenomena of the negative electrode slurry and enhancing cycle stability and storage performance of sodium secondary batteries.

In some embodiments, the apparatus includes at least one of a slurry storage tank and a transport pipeline.

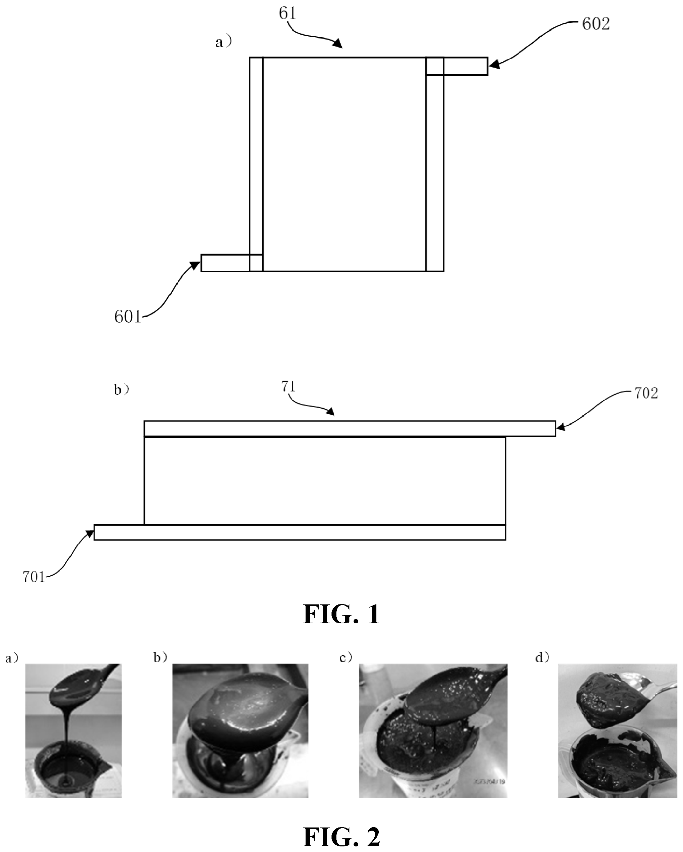

As shown in FIG. 1a) and FIG. 1b), a slurry storage tank 61 or a transport pipeline 71 includes a cooling apparatus, for example, the cooling apparatus contains condensate. For the slurry storage tank 61, the condensate enters from a condensate inlet 601 of the slurry storage tank and exits from a condensate outlet 602 of the slurry storage tank. Alternatively, for the transport pipeline 71, the condensate enters from a condensate inlet 701 of the transport pipeline and exits from a condensate outlet 702 of the transport pipeline. This can effectively reduce the temperature inside the cavity of the container so that the temperature inside the container reaches 0°C to 18°C.

The negative electrode slurry can be stored in the slurry storage tank, and the negative electrode slurry can also be transported in the transport pipeline.

In some embodiments, the cooling apparatus includes a pipeline containing a cooling medium; the cooling medium includes at least one of water, liquid nitrogen, and dry ice.

All of the above cooling media can reduce the temperature in the container cavity, so that a temperature in the container cavity is 0°C to 18°C.

### [Negative electrode plate]

The negative electrode plate includes a negative electrode current collector and a negative electrode film layer arranged on at least one side of the negative electrode current collector, where the negative electrode film layer includes a negative electrode active material.

As an example, the negative electrode current collector has two opposite surfaces in its own thickness direction, and the negative electrode film layer is arranged on either or both of the two opposite surfaces of the negative electrode current collector.

In some embodiments, the negative electrode current collector may be a metal foil or a composite current collector. For example, a copper foil may be used as the metal foil. The composite current collector may include a polymer material substrate layer and a metal layer formed on at least one surface of the polymer material substrate. The composite current collector can be formed by forming a metal material (copper, copper alloys, nickel, nickel alloys, titanium, titanium alloys, silver, silver alloys, and the like) on a polymer material substrate (such as a substrate of polypropylene (PP), polyethylene terephthalate (PET), polybutylene terephthalate (PBT), polystyrene (PS), polyethylene (PE), and the like).

In some embodiments, the negative electrode film layer is prepared from negative electrode slurry obtained by processing using the processing method for a negative electrode slurry described in some embodiments.

In some embodiments, the negative electrode film layer further optionally includes a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other auxiliary agents, such as a thickener (e.g., sodium carboxymethyl cellulose (CMC-Na)).

The negative electrode plate may be prepared by the following steps: dispersing the above components for preparing the negative electrode plate, for example the negative electrode active material, the conductive agent, the binder and any other component, into a solvent (such as deionized water) to form negative electrode slurry; and coating the negative electrode current collector with the negative electrode slurry, and performing processes such as oven drying and cold pressing to obtain the negative electrode plate.

### [Positive electrode plate]

The positive electrode plate includes a positive electrode current collector and a positive electrode film layer arranged on at least one side of the positive electrode current collector, where the positive electrode film layer includes a positive electrode active material.

As an example, the positive electrode current collector has two surfaces opposite to each other in a thickness direction thereof, and the positive electrode film layer is provided on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode active material may be the well-known positive electrode active material for batteries in the art. As an example, the positive electrode active material may include at least one of the following materials: a layered transition metal oxide, a polyanionic compound, and a Prussian blue compound. However, the present application is not limited to these materials, and other conventional materials that can be used as the positive electrode active material of batteries can also be used. These positive electrode active materials may be used alone or in combination of two or more thereof. The Prussian blue compound includes NaₓP[R(CN)₆]_{δ}·zH2O, where the P and R are each independently selected from at least one of transition metal elements, 0<x≤2, 0<δ≤1, and 0≤z≤10; the polyanionic compound includes Na_{b}Me_{c}(PO₄)_{d}O₂X, where A includes one or a plurality of H, Li, Na, K, and NH₄, Me includes one or a plurality of Ti, Cr, Mn, Fe, Co, Ni, V, Cu, and Zn, X includes one or a plurality of F, Cl, and Br, 0<b≤4, 0<c≤2, and 1≤d≤3; and the layered transition metal oxide includes NaₐM_{b}Fe_{c}O₂, where M includes transition metal ions, 0.67<a<1.1, 0.5<b<1, and 0<c<0.5.

In some embodiments, the positive electrode film layer further optionally includes a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and fluoroacrylate resin.

In some embodiments, the positive electrode film layer further optionally includes a conductive agent. As an example, the conductive agent may comprise at least one of superconducting carbon, acetylene black, carbon black, Ketjen black, carbon dot, carbon nanotube, graphene, and carbon nanofiber.

In some implementations, the positive electrode plate may be prepared by the following method: dispersing the above components for preparing the positive electrode plate, for example, the positive electrode active material, the conductive agent, the binder and any other components into a solvent (such as N-methyl pyrrolidone) to form positive electrode slurry; and coating the positive electrode current collector with the positive electrode slurry, and performing processes such as oven drying and cold pressing to obtain the positive electrode plate.

### [Electrolyte]

The electrolyte plays the role of conducting ions between the positive electrode plate and the negative electrode plate. The present application has no specific limitation on the type of the electrolyte, which may be selected according to requirements. For example, the electrolyte may be liquid, gelled, or all solid.

In some embodiments, an electrolyte solution is used as the electrolyte. The electrolyte solution includes an electrolyte salt and a solvent.

In some embodiments, the electrolyte solution includes an electrolyte salt, and the electrolyte salt is at least one selected from the group consisting of NaPF₆, NaBF₄, NaN(SO₂F)₂(NaFSI), NaClO₄, NaAsF₆, NaB(C₂O₄)₂(NaBOB), NaBF₂(C₂O₄)(NaDFOB), NaN(SO₂RF)₂, and NaN(SO₂F)(SO₂RF), where RF is represented as C_{b}F_{2b+1}, b is an integer between 1 and 10, optionally, an integer between 1 and 3.

In some embodiments, the electrolyte salt is one or more selected from the group consisting of NaPF₆, NaN(SO₂F)₂, NaN(CF₃SO₂)₂, NaB(C₂O₄)₂, and NaBF₂(C₂O₄). In some embodiments, the electrolyte salt is one or more selected from the group consisting of NaPF₆, NaN(SO₂RF)₂, and NaBF₂(C₂O₄). In some embodiments, RF is -CF₃, -C₂F₅, or -CF₂CF₂CF₃.

In some embodiments, the electrolyte solution includes a solvent, and the solvent includes at least one selected from the group consisting of chain carbonates, chain carboxylates, cyclic carbonates, ether solvents, sulfone solvents, and nitrile solvents. In some embodiments, the chain carbonates include at least one selected from the group consisting of dimethyl carbonate (DMC), diethyl carbonate (DEC), ethyl methyl carbonate (EMC), methyl propyl carbonate (MPC), methyl isopropyl carbonate (MIPC), methyl butyl carbonate, ethyl propyl carbonate, dipropyl carbonate, and dibutyl carbonate. In some embodiments, the chain carbonates include at least one selected from the group consisting of dimethyl carbonate (DMC), diethyl carbonate (DEC), ethyl methyl carbonate (EMC), and methyl propyl carbonate (MPC). In some embodiments, the chain carboxylates include at least one selected from the group consisting of methyl formate (MF), ethyl formate (EF), methyl propionate (MP), ethyl propionate (EP), propyl propionate (PP), ethyl butyrate (EB), methyl acetate (MA), ethyl acetate (EA), and propyl acetate (PA). In some embodiments, the chain carboxylates include at least one selected from the group consisting of methyl propionate (MP), ethyl propionate (EP), propyl propionate (PP), methyl acetate (MA), ethyl acetate (EA), and propyl acetate (PA). In some embodiments, the ether solvent includes at least one selected from the group consisting of 1,3-dioxolane (DOL), tetrahydrofuran (THF), 2-methyltetrahydrofuran (2Me-THF), tetrahydropyran (THP), 1,2-dimethoxyethane (DME), diethylene glycol dimethyl ether (DG), 1,2-diethoxyethane, and 1,2-dibutoxyethane.

In some embodiments, the electrolyte solution further optionally includes an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the sodium secondary battery also includes the separator. Any well-known porous separator with high chemical stability and mechanical stability can be used.

In some embodiments, the material of the separator can be selected from at least one of glass fiber, non-woven cloth, polyethylene, polypropylene, and polyvinylidene fluoride. The separator may be a single-layer film or a multi-layer composite film. When the isolation film is the multi-layer composite film, the materials of all layers may be the same or different.

In some embodiments, the separator membrane also has at least one of an adhesive coating and a ceramic coating.

### [Sodium secondary battery]

In some embodiments, the positive electrode plate, the negative electrode plate and the separator can be made into an electrode assembly by a winding process or a lamination process.

In some embodiments, the sodium secondary battery can include an outer package. The outer package can be used for packaging the electrode assembly and the electrolyte solution.

In some embodiments, the outer package of the sodium secondary battery can be a hard shell, such as a hard plastic shell, an aluminum shell, and a steel shell. The outer package of the sodium secondary battery can also be a soft package, such as a bag type soft package. The material of the soft package can be plastic, such as polypropylene, polybutylene terephthalate, and polybutylene succinate.

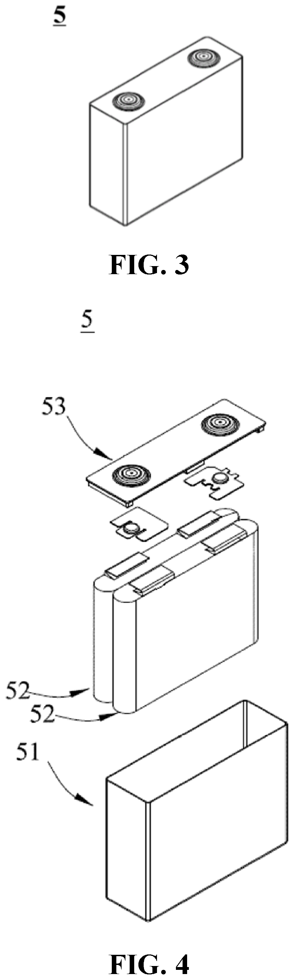

The sodium secondary battery in the present application may be cylindrical, square, or in any other shape. For example, in FIG. 3, a sodium secondary battery 5 of a square structure is taken as an example.

In some embodiments, referring to FIG. 4, the outer package may include a case 51 and a cover plate 53. The case 51 may include a bottom plate and a side plate connected to the bottom plate, and the bottom plate and the side plate enclose to form an accommodating cavity. The case 51 has an opening that is in communication with the accommodating cavity, and the cover plate 53 can cover the opening to close the accommodating cavity. The positive electrode plate, the negative electrode plate and the separator can be made into an electrode assembly 52 by a winding process or a lamination process. The electrode assembly 52 is encapsulated within the accommodating cavity. An electrolyte solution infiltrates the electrode assembly 52. One or a plurality of electrode assemblies 52 may be included in the sodium secondary battery 5, and the number may be selected by those skilled in the art according to specific actual requirements.

In some embodiments, the sodium secondary battery may be assembled into a battery module, one or a plurality of sodium secondary batteries may be included in the battery module, and the specific number may be selected by those skilled in the art according to the application and the capacity of the battery module.

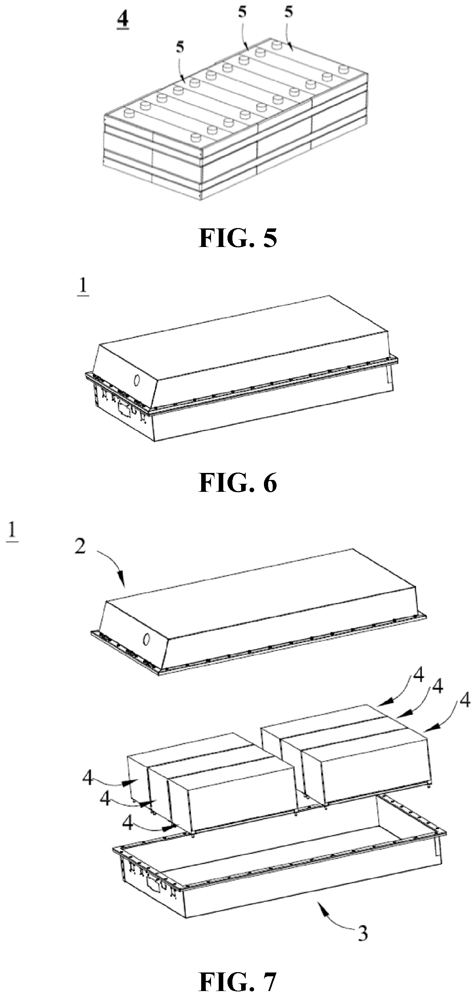

FIG. 5 shows a battery module 4 as an example. Referring to FIG. 5, in the battery module 4, a plurality of sodium secondary batteries 5 may be sequentially arranged in a length direction of the battery module 4. Definitely, they may also be arranged according to any other mode. Further, the plurality of sodium secondary batteries 5 can be further fixed by fasteners.

Optionally, the battery module 4 can also include a shell with an accommodating space, and the plurality of sodium secondary batteries 5 are accommodated in the accommodating space.

In some examples, the battery modules may also be assembled into a battery pack, one or a plurality of battery modules may be included in the battery pack,and the specific number may be selected by those skilled in the art according to the application and the capacity of the battery pack.

FIG. 6 and FIG. 7 show a battery pack 1 as an example. Referring to FIG. 6 and FIG. 7, the battery pack 1 may include a battery box and a plurality of battery modules 4 arranged in the battery box. The battery box includes an upper box body 2 and a lower box body 3, where the upper box body 2 can cover the lower box body 3 and forms an enclosed space for accommodating the battery module 4. The plurality of battery modules 4 can be arranged in the battery box in any mode.

In addition, the present application further provides an electrical apparatus, and the electrical apparatus includes at least one of the sodium secondary battery, the battery module, or the battery pack provided by the present application. The sodium secondary battery, the battery module, or the battery pack can be used as a power supply for the electrical apparatus and can also be used as an energy storage unit for the electrical apparatus. The electrical apparatus can include a mobile device (such as a mobile phone, and a notebook computer), an electric vehicle (such as a pure electric vehicle, a hybrid electric vehicle, a plug-in hybrid electric vehicle, an electric bicycle, an electric scooter, an electric golf cart, and an electric truck), an electric train, a ship, a satellite, an energy storage system and the like, but not limited thereto.

For the electrical apparatus, the sodium secondary battery, the battery module, or the battery pack may be selected according to use requirements thereof.

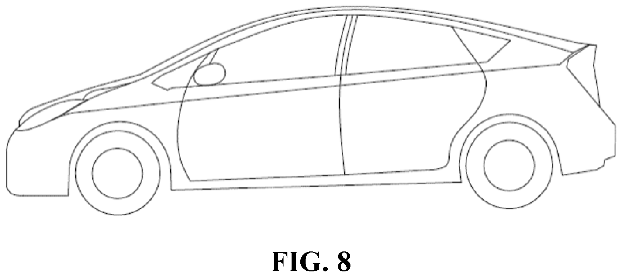

FIG. 8 shows an electrical apparatus as an example. The electrical apparatus is an all-electric vehicle, a hybrid electric vehicle, a plug-in hybrid electric vehicle, or the like. In order to meet the requirements of the electrical apparatus on high power and high energy density of the sodium secondary battery, the battery pack or the battery module can be adopted.

The apparatus serving as another example may be a mobile phone, a tablet, a laptop, and the like. The apparatus is generally required to be light and thin, so the sodium secondary battery may be adopted as the power supply.

### Embodiments

Embodiments of the present application will be described below. The embodiments described below are illustrative and only used to explain the present application, and cannot be construed as limiting the present application. In embodiments in which no specific technologies or conditions are specified, technologies or conditions described in the literature in the art or product specifications are followed. Where manufacturers are not specified, the reagents or instruments used are conventional products and are commercially available.

### I. Preparation method

### Embodiment 1

### 1) Processing negative electrode slurry

In a preparation process of the negative electrode slurry, a mass ratio of hard carbon as a negative electrode active material, Super P as a conductive agent, sodium carboxymethyl cellulose (manufactured by Nippon Paper Industries, with a weight-average molecular weight of 350000) as a dispersant, 1,3-butanediol as a plasticizer, and styrene-butadiene rubber (SBR) as a binder is 95:0.5:0.4:1.0:0.1:3.

Hard carbon as the negative electrode active material, Super P as the conductive agent, and sodium carboxymethyl cellulose with a weight-average molecular weight of 80000 are mixed and stirred at a speed of 600 rpm for 40 minutes to obtain a dry mixture.

The dry mixture is mixed with water as a solvent and kneaded for 60 minutes to obtain an adhesive mixture with a solid content of 65%.

The adhesive mixture is mixed with sodium carboxymethyl cellulose with a weight-average molecular weight of 400000, and water as a solvent is added. The mixture is stirred uniformly at a speed of 1600 rpm for 45 minutes to obtain a first adhesive solution.

The first adhesive solution is mixed with 1,3-butanediol as the plasticizer and stirred evenly. Styrene-butadiene rubber (SBR) as the binder is added and stirring is continued at a stirring speed of 700 rpm for 25 minutes to obtain negative electrode slurry with a solid content of 50%.

The temperature in the above preparation process is controlled at 15°C.

Processing of the negative electrode slurry: the above negative electrode slurry is first placed in a slurry storage tank at a temperature of 5°C, and then transported by a pump to a transport pipeline at a temperature of 5°C. The storage time in the slurry storage tank is 24 hours, the transport time in the transport pipeline is 24 hours, and the linear velocity of the transport pipeline is 20 m/s. The foaming volume per unit mass of hard carbon in the processed negative electrode slurry is 0 mL, and the viscosity change is 14223 mPa·s.

### 2) Negative electrode plate

The copper foil with a thickness of 8 µm as the negative electrode current collector is uniformly coated with the above processed negative electrode slurry. The copper foil is air dried at room temperature, then transferred to and dried in an oven at 120°C for 1 hour, and then cold-pressed and slit to obtain a negative electrode plate.

### 3) Positive electrode plate

Na₃V₂(PO₄)₂O₂F as the positive electrode active material, acetylene black as the conductive agent, and polyvinylidene fluoride (PVDF) as the binder are fully stirred and mixed at a weight ratio of 80:10:10 in a suitable amount of N-methyl pyrrolidone (NMP), so as to form uniform positive electrode slurry. An aluminum foil with a thickness of 13 µm as the positive electrode current collector is coated with the positive electrode slurry uniformly at a density of 0.28 g (dry weight)/1,540.25 mm² and a coating speed of 30 m/min. The temperature of an oven for coating is 110°C, and the aluminum foil is then subjected to cold-pressing and slitting to obtain the positive electrode plate.

### 4) Electrolyte solution

In a glove box with an argon atmosphere (H₂O content <10 ppm, O₂ content <1 ppm), propylene carbonate (PC) and ethyl methyl carbonate (EMC) are mixed at a mass ratio of 30/70, with 1 M of NaPF₆ sodium salt dissolved therein. The mixture is stirred evenly to prepare the electrolyte solution.

### 5) Separator

A 12 µm polyethylene (PE) porous polymer film is used as the separator.

### 6) Preparation of battery

The positive electrode plate, the separator, and the negative electrode plate are stacked in sequence, with the separator located between the positive electrode plate and the negative electrode plate so as to isolate the positive electrode plate from the negative electrode plate, and then wound to obtain a bare cell. Tabs are welded, the bare cell is placed in an outer package, the prepared electrolyte solution is injected into the dried cell, and then processes of sealing, standing, formation, shaping, and capacity testing are carried out to obtain the sodium secondary battery product in Embodiment 1.

The preparation method for the sodium secondary battery in Embodiments 2 to 7 is basically the same as the preparation method in Embodiment 1, except that the temperature of the slurry storage tank or transport pipeline is adjusted, and specific parameters are shown in Table 1.

The preparation method for the sodium secondary battery in Embodiments 8 to 10 is basically the same as the preparation method in Embodiment 1, except that the stirring speed of the slurry storage tank is adjusted, and specific parameters are shown in Table 1.

The preparation method for the sodium secondary battery in Embodiments 11 and 12 is basically the same as the preparation method in Embodiment 1, except that the maximum stirring speed of preparing the first adhesive solution in the process of preparing the negative electrode slurry is adjusted, and specific parameters are shown in Table 1.

The preparation method for the sodium secondary battery in Embodiments 13 to 14 is basically the same as the preparation method in Embodiment 1, except that the temperature during preparation of the negative electrode slurry is adjusted, and specific parameters are shown in Table 1.

The preparation method for the sodium secondary battery in Embodiment 15 is basically the same as the preparation method in Embodiment 1, except that the negative electrode slurry is merely stored in the slurry storage tank and the storage time is 48 h, and specific parameters are shown in Table 1.

The preparation method for the sodium secondary battery in Embodiment 16 is basically the same as the preparation method in Embodiment 1, except that the negative electrode slurry is merely transported in the transport pipeline and the transportation time is 48 h, and specific parameters are shown in Table 1.

The preparation method for the sodium secondary battery in Comparative Examples 1 to 2 is basically the same as the preparation method in Embodiment 1, except that the temperature of the slurry storage tank and/or transport pipeline is adjusted, and specific parameters are shown in Table 1.

### II. Performance test

### 1. Negative electrode slurry

### 1) Viscosity change test of the negative electrode slurry after storage and/transportation for 24 hours and 48 hours

The initial viscosity of the negative electrode slurry before being processed is measured using a rotational viscometer: A suitable rotor is selected, the rotor of the viscometer is fixed, and the negative electrode slurry is placed under the rotor of the viscometer so that the negative electrode slurry just submerges the scale line of the rotor, with an instrument model: Shanghai Fangrui NDJ-5S, rotor: 63# (2000-10000 mPa.s ), 64# (10000-50000 mPa.s), rotational speed: 12 rpm, test temperature: 25°C, test time 5 min. The data is read when the display is stable.

The viscosity of the negative electrode slurry is re-tested after storing and/or transporting for 24 hours, and the viscosity of the negative electrode slurry is measured using a rotational viscometer. A suitable rotor is selected, the rotor of the viscometer is fixed, and the negative electrode slurry is placed under the rotor of the viscometer so that the negative electrode slurry just submerges the scale line of the rotor, with an instrument model: Shanghai Fangrui NDJ-5S, rotor: 63# (2000-10000 mPa.s ), 64# (10000-50000 mPa.s), rotational speed: 12 rpm, test temperature: 25°C, test time 5 min. The data is read when the display is stable. The viscosity change of the negative electrode slurry after 24 hours of storage and/or transportation is a difference between the viscosity of the negative electrode slurry after 24 hours of storage and/or transportation and the initial viscosity of the negative electrode slurry.

The viscosity of the negative electrode slurry is re-tested after storing and/or transporting for 48 hours, and the viscosity of the negative electrode slurry is measured using a rotational viscometer. A suitable rotor is selected, the rotor of the viscometer is fixed, and the negative electrode slurry is placed under the rotor of the viscometer so that the negative electrode slurry just submerges the scale line of the rotor, with an instrument model: Shanghai Fangrui NDJ-5S, rotor: 63# (2000-10000 mPa.s ), 64# (10000-50000 mPa.s), rotational speed: 12 rpm, test temperature: 25°C, test time 5 min. The data is read when the display is stable. The viscosity change of the negative electrode slurry after 48 hours of storage and/or transportation is a difference between the viscosity of the negative electrode slurry after 48 hours of storage and/or transportation and the initial viscosity of the negative electrode slurry.

### 2) Gelation state test of the negative electrode slurry after storage and/or transportation for 48 hours

After the negative electrode slurry is stored and/or transported for 48 hours, a suitable amount of the negative electrode slurry is taken and placed in a beaker, a straight steel ruler is used to pick up the negative electrode slurry in the beaker, and a gelation state of the negative electrode slurry is determined according to a flow state of the negative electrode slurry.

In a gelation-free state, the negative electrode slurry flows naturally and continuously, and the negative electrode slurry flows evenly on the surface of the steel ruler without lumps, as shown in FIG. 2a).

In a slight gelation state, the negative electrode slurry flows naturally and continuously, but the fluid is relatively fine, and the negative electrode slurry is basically spread evenly on the surface of the steel ruler, with small lumps, as shown in FIG. 2b).

In a moderate gelation state, the negative electrode slurry drips naturally and intermittently; it flows discontinuously, and the negative electrode slurry cannot be spread evenly on the surface of the steel ruler, and there are obvious lumpy agglomerations, as shown in FIG. 2c).

In a severe gelation state, the negative electrode slurry cannot flow down in a stream, forms into lumps and falls off, or remains directly on the steel ruler and cannot flow down, as shown in FIG. 2d).

### 3) Test of foaming volume in negative electrode slurry

After 48 hours of storage and/or transportation, the negative electrode slurry (the mass of hard carbon in the negative electrode slurry is m, in g) is sealed in a sealed bag; and gas changes are tested using a water displacement method. An initial volume is V0, in mL, and a test volume after 48 hours is V1, in mL. Therefore, a gas production rate of the negative electrode slurry = (V1-V0)/m, in mL/g.

### 2. Battery

### 1) Cycle performance

At 25°C, the prepared battery is charged to 3.95 V at a 1 C constant current and then charged at a constant voltage of 3.95 V until the current dropped to 0.05 C, and after being stood for 10 min, the battery is discharged to 1.5 V at the 1 C constant current, and such operation is one charge/discharge cycle of the battery. Taking the capacity of the first discharge as 100%, charge/discharge cycles are performed repeatedly. The test is stopped when the discharge capacity decays to 80%, and the number of cycles is recorded. The number of cycles at which the capacity retention rate drops to 80% is taken as an indicator for evaluating the cycle performance of the battery.

### 2) Cycle performance

At 25°C, the prepared battery is charged to 3.95 V at a 1 C constant current and then charged at a constant voltage of 3.95 V until the current dropped to 0.05 C, and after being stood for 10 min, the battery is discharged to 1.5 V at the 1 C constant current, and such operation is one charge/discharge cycle of the battery. The capacity of the first discharge is taken as 100%. Then, the battery is placed in a 60°C oven and stored for a period of time. After that, the battery is taken out and the charging step is repeated. The discharge capacity is recorded until the discharge capacity is decayed to 80%. The test is then stopped and the number of storage days is recorded. The number of storage days with a capacity retention rate of 80% is used as an indicator for evaluating the storage performance of the battery.

### III. Analysis of test results of various embodiments and comparative examples

The batteries in various embodiments and comparative example are prepared respectively according to the above methods, and various performance parameters are measured. The results are shown in Table 1 below.

**Table 1**

| Serial number | Negative electrode slurry | | | | | |
|---|---|---|---|---|---|---|
| | Container | | | Preparation method | | Initial viscosity /mPa·s |
| | Type | Temperature /°C | Stirring speed /rpm | Temperature /°C | Stirring speed /rpm | |
| Embodiment 1 | Slurry storage tank | 5 | 0 | 15 | 1500 | 8213 |
| | Transport pipeline | 5 | / | | | |
| Embodiment 2 | Slurry storage tank | 0 | 0 | 15 | 1500 | 8213 |
| | Transport pipeline | 5 | / | | | |
| Embodiment 3 | Slurry storage tank | 3 | 0 | 15 | 1500 | 8213 |
| | Transport pipeline | 5 | / | | | |
| Embodiment 4 | Slurry storage tank | 10 | 0 | 15 | 1500 | 8213 |
| | Transport pipeline | 5 | / | | | |
| Embodiment 5 | Slurry storage tank | 18 | 0 | 15 | 1500 | 8213 |
| | Transport pipeline | 5 | / | | | |
| Embodiment 6 | Slurry storage tank | 5 | 0 | 15 | 1500 | 8213 |
| | Transport pipeline | 10 | / | | | |
| Embodiment 7 | Slurry storage tank | 5 | 0 | 15 | 1500 | 8213 |
| | Transport pipeline | 18 | / | | | |
| Embodiment 8 | Slurry storage tank | 5 | 15 | 15 | 1500 | 8213 |
| | Transport pipeline | 5 | / | | | |
| Embodiment 9 | Slurry storage tank | 5 | 25 | 15 | 1500 | 8213 |
| | Transport pipeline | 5 | / | | | |
| Embodiment 10 | Slurry storage tank | 5 | 10 | 15 | 1500 | 8213 |
| | Transport pipeline | 5 | / | | | |
| Embodiment 11 | Slurry storage tank | 5 | 0 | 15 | 1800 | 7232 |
| | Transport pipeline | 5 | / | | | |
| Embodiment 12 | Slurry storage tank | 5 | 0 | 15 | 800 | 8945 |
| | Transport pipeline | 5 | / | | | |
| Embodiment 13 | Slurry storage tank | 5 | 0 | 5 | 1500 | 8434 |
| | Transport pipeline | 5 | / | | | |
| Embodiment 14 | Slurry storage tank | 5 | 0 | 35 | 1500 | 7854 |
| | Transport pipeline | 5 | / | | | |
| Embodiment 15 | Slurry storage tank | 5 | 0 | 15 | 1500 | 8213 |
| Embodiment 16 | Transport pipeline | 5 | / | 15 | 1500 | 8213 |
| Comparative example 1 | Slurry storage tank | -2 | 0 | 15 | 1500 | 8213 |
| | Transport pipeline | 5 | / | | | |
| Comparative example 2 | Slurry storage tank | 20 | 0 | 15 | 1500 | 8213 |
| | Transport pipeline | 20 | / | | | |

| Serial number | Negative electrode slurry | | | | Battery | |
|---|---|---|---|---|---|---|
| | Viscosity change in 24 h / mPa·s | Viscosity change in 48 h / mPa·s | Gelation state in 48 h | Foaming volume per unit mass of hard carbon in 48 h /mL | Cycle performance/ cycle | Storage performance/day |
| Embodiment 1 | 9822 | 14223 | Gelation-free | 0 | 1500 | 781 |
| Embodiment 2 | 12235 | 14321 | Gelation-free | 0 | 1388 | 684 |
| Embodiment 3 | 11453 | 13879 | Gelation-free | 0 | 1422 | 710 |
| Embodiment 4 | 12653 | 14712 | Slight gelation | 1.5 | 981 | 515 |
| Embodiment 5 | 23674 | 28412 | Moderate gelation | 3.2 | 635 | 320 |
| Embodiment 6 | 9354 | 14565 | Gelation-free | 0.8 | 1208 | 675 |
| Embodiment 7 | 9450 | 15420 | Moderate gelation | 1.4 | 890 | 578 |
| Embodiment 8 | 9860 | 14250 | Gelation-free | 0 | 1505 | 783 |
| Embodiment 9 | 8340 | 12540 | Gelation-free | 0 | 1491 | 767 |
| Embodiment 10 | 8240 | 14450 | Gelation-free | 0 | 1502 | 781 |
| Embodiment 11 | 8365 | 11521 | Gelation-free | 0 | 1432 | 720 |
| Embodiment 12 | 9854 | 10565 | Gelation-free | 0 | 1426 | 712 |
| Embodiment 13 | 9850 | 13276 | Gelation-free | 0 | 1493 | 764 |
| Embodiment 14 | 9856 | 12150 | Gelation-free | 0 | 1290 | 647 |
| Embodiment 15 | 9810 | 14120 | Gelation-free | 0 | 1476 | 779 |
| Embodiment 16 | 9850 | 14250 | Gelation-free | 0 | 1478 | 778 |
| Comparative example 1 | Slurry frozen, testing cannot be performed | | | | | |
| Comparative example 2 | Severe gellation, exceed the viscosity specification for mass production | | | 4.8 | 296 | 132 |

Embodiments 1 to 16 all involve storing and/or transporting the negative electrode slurry at a temperature of 0°C to 18°C, the negative electrode slurry including hard carbon. As may be seen from Embodiments 1 to 16, storing and/or transporting the negative electrode slurry containing hard carbon at the temperature of 0°C to 18°C alleviates the gelation of the negative electrode slurry, reduces the foaming volume per unit mass of hard carbon, and results in good cycle stability and storage performance of the battery.

As can be seen from the comparison of the embodiments and comparative examples, storing and/or transporting the negative electrode slurry at the temperature of 0°C to 18°C can effectively alleviate the gelation of the slurry, reduce the foaming volume per unit mass of hard carbon, and improve the cycle stability and storage performance of the battery.

As can be seen from Embodiment 1 and Embodiments 8 to 10, when the stirring speed of the slurry storage tank does not exceed 25 rpm, after the prepared slurry is stored and/or transported at the temperature of 0°C to 18°C, no gelation occurs in the negative electrode slurry, the foaming volume per unit mass of hard carbon is small, and the battery has good cycle stability and storage performance. When the stirring speed of the slurry storage tank is 0 rpm to 15 rpm, the cycle stability and storage performance of the battery can be further improved.

As can be seen from Embodiments 1, 11, and 12, when the maximum stirring speed for preparing the negative electrode slurry is 800 rpm to 1800 rpm, after the prepared slurry is stored and/or transported at the temperature of 0°C to 18°C, no gelation occurs in the negative electrode slurry, the foaming volume per unit mass of hard carbon is small, and the battery has good cycle stability and storage performance.

As can be seen from Embodiments 1, 14, and 15, when the temperature of preparing the negative electrode slurry is 5°C to 35°C, after the prepared slurry stored and/or transported at the temperature of 0°C to 18°C, no gelation occurs in the negative electrode slurry, the foaming volume per unit mass of hard carbon is small, and the battery has good cycle stability and storage performance. When the temperature for preparing the negative electrode slurry is 5°C to 15°C, the cycle stability and storage performance of the battery can be further improved.

It is to be noted that the present application is not limited to the above embodiments. The above embodiments are only examples, and embodiments that have the same composition and exert the same effect as the technical ideas within the scope of the technical solution of the present application are included in the technical scope of the present application. In addition, other methods that apply various deformations that can be conceived by those skilled in the art to the examples and construct them by combining some of the constituent elements of the embodiments are also included in the scope of the present application, within the scope of the application that do not deviate from the main purpose of the present application.

## Claims

1. A processing method for a negative electrode slurry, comprising:
storing and/or transporting the negative electrode slurry at a temperature of 0°C to 18°C, the negative electrode slurry comprising porous carbon.

2. The processing method according to claim 1, wherein the negative electrode slurry is stored and/or transported at a temperature of 3°C to 10°C, and optionally the negative electrode slurry is stored and/or transported at a temperature of 3°C to 6°C.

3. The processing method according to claim 1 or 2, wherein the negative electrode slurry is stored and/or transported at a stirring speed not exceeding 25 rpm.

4. The processing method according to any one of claims 1 to 3, wherein
the porous carbon comprises hard carbon.

5. The processing method according to any one of claims 1 to 4, wherein
a solid content of the negative electrode slurry is 45% to 55%, and optionally 48% to 53%; and/or
after the negative electrode slurry is processed by the processing method for 48 hours, a volume of bubbles per unit mass of porous carbon thereof does not exceed 4 mL/g.

6. The processing method according to any one of claims 1 to 5, wherein
a viscosity change of the negative electrode slurry after being processed by the processing method for 48 hours ranges from 10000 mPa·s to 30000 mPa·s.

7. The processing method according to any one of claims 1 to 6, wherein the processing method specifically comprises:
preparing the negative electrode slurry; and
storing the negative electrode slurry in a slurry storage tank and/or transporting the negative electrode slurry in a pipeline.

8. The processing method according to claim 7, wherein the preparing the negative electrode slurry meets at least one of the following conditions:
(1) a maximum stirring speed is 800 rpm to 1800 rpm, and optionally, 1000 rpm to 1500 rpm; and
(2) a temperature is 5°C to 35°C, and optionally 5°C to 15°C.

9. A processing apparatus for a negative electrode slurry, comprising:
a cavity configured to accommodate the negative electrode slurry, the negative electrode slurry comprising porous carbon; and
a cooling apparatus configured to cool the cavity so that a temperature of the cavity ranges from 0°C to 18°C.

10. The apparatus according to claim 9, wherein the apparatus comprises at least one of a slurry storage tank and a transport pipeline.
